# EUROPÄISCHE PATENTANMELDUNG

(11) **EP 3 086 447 A1**
(43) Veröffentlichungstag der Anmeldung: **26.10.2016**
(21) Anmeldenummer: 15164971.2
(22) Anmeldetag: 24.04.2015
(51) Int. Cl.: H02K 9/28

(54) **SCHLEIFRINGANORDNUNG MIT SPIRALLÜFTER**

(71) Anmelder: Siemens Aktiengesellschaft, 80333 München (DE)
(72) Erfinder: Hoenig, Christian, 44869 Bochum (DE)

(57) **Zusammenfassung**

Eine Schleifringanordnung (1) für eine elektrische Rotationsmaschine weist einen Rotor (2) und eine an dem Rotor (2) angeordnete Schleifkontakteinrichtung (3) mit einem Schleifring und ein durch den Schleifring elektrisch kontaktierbares Schleifkontaktelement auf. Weiterhin ist an dem Rotor (2) ein Radiallüfterrad (4) mit einer Ansaugeinrichtung angeordnet, wobei die Ansaugeinrichtung derart ausgebildet ist, dass während eines Betriebs des Radiallüfterrads (4) ein Kühlfluid entlang der Schleifkontakteinrichtung (3) durch die Ansaugeinrichtung hindurch in das Radiallüfterrad (4) saugbar ist. Weiterhin weist die Schleifringanordnung (1) ein einen radialen Umfang des Radiallüfterrads (4) umschließendes, spiralförmig ausgebildetes Spiralgehäuse (10) auf.

## Beschreibung

Die Erfindung betrifft eine Schleifringanordnung mit für eine elektrische Rotationsmaschine wie beispielsweise einen Generator, insbesondere Turbogenerator, oder Motor. Die Erfindung betrifft weiterhin einen Nachrüstsatz für eine derartige Anordnung.

Schleifringanordnungen mit einem Schleifring und einem Schleifkontaktelement wie z.B. einer sogenannten Bürste bilden einen Gleitkontakt bzw. eine Bürstenbrücke, die es ermöglicht, eine elektrische Leistung oder ein Signal zwischen gegeneinander rotierenden Bauteilen zu übertragen. Insbesondere können Schleifringanordnungen in Generatoren, Synchronmaschinen bzw. Turbogeneratoren dazu verwendet werden, die nötige Erregerspannung von einer statischen Erregereinrichtung mittels der Gleitkontakte der Schleifringanordnung in Erregerwicklungen des Rotors bzw. Läufers einzuspeisen.

Derartige Schleifringanordnungen müssen gekühlt werden, um die durch Reibung und Strom entstehenden Temperaturen abzuführen.

Weiterhin entsteht durch die mechanische Reibung am Gleitkontakt Reibstaub, welcher abzuführen ist, da er sonst die Funktionsfähigkeit der Schleifkontakteinrichtung und insbesondere ihre elektrischen Kontakteigenschaften beeinträchtigen kann.

Aufgabe der Erfindung ist es, eine Schleifringanordnung mit verbesserten Betriebseigenschaften, insbesondere einer geringeren Fehleranfälligkeit und einer erhöhten Lebensdauer anzugeben.

Diese Aufgabe wird gelöst durch eine Schleifringanordnung für eine elektrische Rotationsmaschine gemäß dem unabhängigen Patentanspruch.

Eine Schleifringanordnung für eine elektrische Rotationsmaschine weist einen Rotor, eine an dem Rotor angeordnete Schleifkontakteinrichtung mit einem Schleifring und einem durch den Schleifring elektrisch kontaktierbaren Schleifkontaktelement und ein an dem Rotor angeordnetes Radiallüfterrad mit einer Ansaugeinrichtung auf, wobei die Ansaugeinrichtung derart ausgebildet ist, dass während eines Betriebs des Radiallüfterrads ein Kühlfluid entlang der Schleifkontakteinrichtung durch die Ansaugeinrichtung hindurch in das Radiallüfterrad saugbar ist. Weiterhin weist die Schleifringanordnung ein einen radialen Umfang des Radiallüfterrads umschließendes, spiralförmig ausgebildetes Spiralgehäuse auf.

Die elektrische Rotationsmaschine kann eine beliebige elektrische Maschine wie beispielsweise ein Motor oder ein Generator sein, bei der über die Schleifkontakteinrichtung von einem Stator auf den Rotor beispielsweise eine elektrische Leistung oder ein Signal zu übertragen ist. Insbesondere kann die Rotationsmaschine ein Turbogenerator sein.

Die Schleifkontakteinrichtung kann einen elektrischen Gleitkontakt zwischen dem Schleifring und dem Schleifkontaktelement ausbilden, durch den zwischen dem Stator oder dem Rotor elektrische Spannungen oder Signale übertragbar sind.

Das Schleifkontaktelement wird auch als Bürste, Kohlebürste, Schleifkohle oder Motorkohle bezeichnet. Seine Zusammensetzung muss den Anforderungen an den Kontakt und die zu übertragende Leistung angepasst sein und kann variieren. Es kann Graphit, angereichert mit metallischen Komponenten wie z.B. Kupfer, Silber oder Molybdän oder auch nur metallische Komponenten aufweisen.

Durch Reibung und starke Hitzeentwicklung tritt an der Schleifkontakteinrichtung und insbesondere am Schleifkontaktelement ein Materialabrieb auf, der im Folgenden unabhängig von der Materialzusammensetzung als Kohlenstaub bezeichnet wird. Dieser Kohlenstaub kann die elektrischen Eigenschaften der Schleifkontakteinrichtung gravierend beeinträchtigen, so dass insbesondere wegen der hohen Anforderungen an die Erregerstromübertragung bei Generatoren die Funktionalität und Lebensdauer und insgesamt die Einsetzbarkeit einer Schleifringanordnung beeinträchtigt sein kann.

Zum Erzeugen eines Kühlfluidstroms und weiter zum Abtransport des Kohlenstaubs ist das an dem Rotor angeordnete Radiallüfterrad mit der Ansaugeinrichtung vorgesehen. Insbesondere kann die Ansaugeinrichtung derart gestaltet sein, dass ein an der Schleifkontakteinrichtung beispielsweise aus einem Kühlfluidreservoir bereitgestelltes Kühlfluid durch die Ansaugeinrichtung derart eingesogen wird, dass es entlang der Schleifkontakteinrichtung geführt wird und insbesondere in einem Bereich zwischen Schleifring und Schleifkontaktelement vorbeiströmt, bevor es durch das beispielsweise von dem Rotor angetriebene Radiallüfterrad ausgeblasen wird.

Insbesondere kann die Ansaugeinrichtung einen Ansaugstutzen aufweisen, der die am dem Rotor angeordnete Schleifkontakteinrichtung im Wesentlichen umschließt und einen Kanal zum Radiallüfterrad ausbildet. Bei einer Rotation des Radiallüfterrads z.B. durch den Rotor wird die zwischen Schaufeln des Radiallüfterrads befindliche Luft durch die Zentrifugalkraft nach außen befördert, so dass ein Sog im Bereich der Ansaugeinrichtung bzw. des Ansaugstutzens entsteht, durch den das Kühlfluid entlang der Schleifkontakteinrichtung geführt werden kann.

Um das erwärmte und mit dem Kohlenstaub verschmutzte Kühlfluid gezielt und effektiv ableiten zu können, weist die Anordnung das Spiralgehäuse auf, das in einer Schnittebene senkrecht zur Rotationsachse des Rotors eine spiralförmig angeordnete Innenwand aufweist.

Die spiralförmige Anordnung der Innenwand ermöglicht es, den Strom des mit dem Kohlenstaub verschmutzten Kühlfluids durch das Spiralgehäuse im Wesentlichen ungehindert auszuleiten, wobei Gebiete mit großen Druckunterschieden innerhalb des Spiralgehäuses vermieden werden. Hierdurch können Verwirbelungen, Rückstromgebiete, in denen auf kleinem Raum Partikelbewegungen mit unterschiedlichen Ausrichtungen auftreten, und Totstromgebiete mit geringen Strömungsgeschwindigkeiten vermieden werden.

Es hat sich gezeigt, dass sich dies besonders positiv auf den Abtransport des Reibstaubs auswirkt, da dieser aufgrund seiner Oberflächen- und Ladungseigenschaften in Rück- und Totstromgebieten leicht verklumpt und/oder sich an der Innenwand anlagert. Durch die spiralförmige Gestaltung des Gehäuses wird somit ein gleichmäßiges Ausströmen des mit dem Reibstaub durchsetzten Kühlfluids bewirkt, wodurch Verklumpungen und Ablagerungen im Bereich des Spiralgehäuses vermieden werden können.

Hierdurch wird einerseits der Massenstrom durch das Spiralgehäuse und andererseits der Austrag des Reibstaubs verbessert. Wartungsintervalle können verlängert werden und die Lebensdauer der gesamten Schleifringanordnung wird verbessert. Gleichzeitig können gleichbleibende elektrische Kontakteigenschaften erreicht werden, wodurch eine verbesserte Tauglichkeit der Schleifringanordnung für den Einsatz in Hochleistungsgeneratoren erreicht wird.

In einer Ausführungsform weist das Spiralgehäuse einen Spiralbereich und einen stromab von dem Spiralbereich angeordneten Abströmbereich mit einer Abströmöffnung auf, wobei in dem Spiralbereich einen Innenwand des Spiralgehäuses im Wesentlichen einer Spiralfunktion entsprechend von einer Rotationsachse des Rotors beabstandet ist.

Die Spiralfunktion kann dabei insbesondere ersichtlich werden, wenn das Spiralgehäuse in einer Ebene senkrecht zur Rotationsachse des Rotors aufgeschnitten wird. In dieser Schnittebene kann die Innenwand des Spiralgehäuses eine Kurve bilden, die um die Rotationsachse des Rotors verläuft und sich von der Rotationsachse kontinuierlich entfernt. Die Spiralfunktion kann dabei als Schneckenlinie einer mathematisch beschriebenen Spiralfunktion lediglich nachempfunden sein oder ganz oder stückweise einer beispielsweise mathematischen Spiralfunktion entsprechen.

Die Spiralfunktion kann beispielsweise nach Art einer archimedischen Spirale ausgebildet sein, durch die der Abstand zwischen Innenwand und Rotationsachse im Wesentlichen proportional zum Drehwinkel und damit zu einem Umfangsabschnitt des Radiallüfterrads anwachsen kann. Hierdurch kann am Umfang das Radiallüfterrad ausgeblasenes Kühlfluid durch den sich archimedisch weitenden Gehäusebereich effektiv abtransportiert werden, wobei Hochdruckgebiete vermieden werden.

Alternativ dazu kann die Spiralfunktion durch eine angenäherte Betrachtung des Wegs eines Stromfadens und/oder Reibstaubpartikels festgelegt sein, wodurch sich nach differentialgeometrischen Betrachtungen eine logarithmische Spiralfunktion ergibt, bei der Radiallinien durch die Rotationsachse die Innenwand unter gleichbleibendem Tangentenwinkel schneiden. Bei einer derartigen Anordnung der Innenwand können Stromfäden und somit auch die mit dem Kühlfluid vermengten Reibstaubpartikel im Wesentlichen ungehindert und unter Vermeidung von Hochdruckgebieten aus dem Spiralbereich heraus geleitet werden. Dies unterstützt den effektiven Abtransport der Reibstaubpartikel und verhindert eine Ablagerung der Partikel an der Innenwand.

Auch weitere Spiralgestaltungen sind möglich, wie beispielsweise eine Anordnung der Innenwand als hyperbolische Spirale oder eine stückweise Spiraldefinition.

Der stromab von dem Spiralbereich angeordnete Abströmbereich kann beispielsweise nach Art eines Abströmstutzens eine gezielte Ausleitung des Kühlfluids und des damit vermengten Reibstaubs gewährleisten.

In einer Ausführungsform ist in dem Abströmbereich die Größe der Querschnittsfläche in Strömungsrichtung konstant. Insbesondere können die den Abströmbereich seitlich begrenzenden Innenwände in einer Schnittebene senkrecht zur Rotationsachse des Rotors zumindest stückweise oder im gesamten Abströmbereich parallel zueinander angeordnet sein.

Die in Strömungsrichtung konstante Querschnittsfläche des Abströmbereichs ermöglicht ein Abströmen des mit dem Reibstaub verunreinigten Kühlfluids durch den Abströmbereich mit konstantem Druck, so dass Bereiche höheren Drucks sowie Verwirbelungen beispielsweise an der Innenwand im Abströmbereich vermieden werden. Der Abströmstutzen wird gleichmäßig durchströmt, was eine Bildung von Reibstaubablagerungen vermindert und gleichzeitig einen Abtrag etwaiger Ablagerungen verbessert. Einer Verschmutzung des Spiralgehäuses wird so effektiv vorgebeugt bzw. entgegengewirkt.

In einer Variante ist in einem Übergangsbereich zwischen dem Spiralbereich und dem Abströmbereich durch die Innenwand eine Zunge derart ausgebildet, dass an der Zunge in einer Schnittebene senkrecht zur Rotationsachse ein Zungenabstand zwischen der Innenwand und einem äußeren Umfang des Radiallüfterrads besteht, der minimaler Abstand zwischen der Innenwand und dem äußeren Umfang des Radiallüfterrads ist.

Die Zunge bildet somit im Anstoßbereich zwischen dem Spiralbereich und dem Abströmbereich eine Art Knick bzw. Falte der Innenwand aus. Hierdurch entsteht ein Vorstand, an dessen Spitze ein Ort minimalen Abstands zwischen Innenwand und Umfang des Radiallüfterrads befindlich ist. Der Zungenabstand entspricht dem radial von der Rotationsachse der Welle ausgehend gemessenen Abstand zwischen dem äußeren Umfang des Radiallüfterrads und der Innenwand an der Spitze der Zunge.

Durch die Zunge wird zwischen Innenwand und Umfang des Radiallüfterrads ein schmaler Spalt ausgebildet. Hierdurch kann vermieden werden, dass bereits aus dem Radiallüfterrad heraus befördertes, mit Reibstaub versetztes Kühlfluid durch seinen Drall aus dem Abströmbereich erneut in den Spiralbereich gelangt. Insbesondere werden Reibstaubpartikel, die bereits aus dem Spiralbereich in den Abströmbereich geleitet wurden, durch die Zunge an einem erneuten Eintreten in den Spiralbereich im Wesentlichen gehindert.

Da derartige Partikel durch die Führung im Spiralbereich zum Abströmbereich bereits verlangsamt wurden, würde ihr erneutes Eintreten in den Spiralbereich nahe an der Innenwand ein Ablagern wahrscheinlich machen. Durch die Zunge wird daher effektiv den Reibstaubablagerungen im Spiralbereich vorgebeugt.

In einer Ausführungsform ist der Zungenabstand kleiner als die Hälfte einer Radialerstreckung von Schaufeln des Radiallüfterrads.

Hierdurch wird ein erneutes Eintragen des bereits aus dem Spiralbereich in den Abströmbereich ausgetragenen, mit Reibstaub durchsetzen Kühlfluids in den Spiralbereich vermieden, so dass weiteren Ablagerungen entgegengewirkt wird.

In einer weiteren Ausführungsform entspricht in dem Spiralbereich ein Maximalwert eines radial von der Rotationsachse des Rotors ausgehend gemessenen Abstands zwischen dem äußeren Umfang des Radiallüfterrads und der Innenwand einem Sechs- bis Achtfachen des Zungenabstands.

Durch eine derartige Gestaltung des Spiralbereichs wird eine ausreichende Weitung des Bereichs zwischen der radialen Austrittskante des Radiallüfterrads und der Innenwand entlang einer Bewegungsrichtung der Schaufeln des Radiallüfterrads erzielt. Dies ermöglicht einen effektiven Abtransport des mit dem Reibstaub versetzten Kühlfluids durch die Schaufeln des Lüfterrads bei ihrer Drehung ausgehend von dem Bereich der Zunge hin zum Bereich des Maximalwerts. Hierdurch werden Druckunterschiede vermieden, ein gleichmäßiges Ausströmen des verunreinigten Kühlfluids wird unterstützt und Ablagerungen wird entgegengewirkt.

In einer weiteren Ausführungsform ist die Zunge stumpfwinklig ausgebildet. Insbesondere kann eine Tangentialfläche der Innenwand im Spiralbereich mit einer Tangentialfläche der Innenwand im Abströmbereich im Bereich der Zunge bzw. der Zungenspitze einen stumpfen Außenwinkel in Bezug auf die Rotationsachse einschließen.

Durch die stumpfwinklige Ausführung der Zunge werden Gebiete mit großen Druckunterschieden noch besser vermieden, was der Entstehung von Rückstrombereichen und der Ausbildung von Totstrombereichen mit hoher Ablagerungsgefahr des Reibstaubs entgegenwirkt.

In einer weiteren Ausführungsform schließt die Zunge einen Winkel zwischen 110° und 130° ein.

Ein derartiger Winkel hat sich in Versuchsreihen als geeignet erwiesen, um einerseits einem erneuten Eintrag des bereits in den Abströmbereich geleiteten, mit dem Reibstaub durchsetzten Kühlfluids in den Spiralbereich entgegenzuwirken und andererseits die Ausbildung von Strömungsgebieten mit hohen Druckunterschieden zu vermeiden, die für die Ausbildung von Rück- und/oder Totstromgebieten ursächlich sein können.

Ein Nachrüstsatz für eine Schleifringanordnung mit den vorstehend genannten Merkmalen weist insbesondere das Spiralgehäuse auf.

Das Spiralgehäuse weist dabei insbesondere einzelne oder alle Merkmale wie vorstehend beschrieben auf. Es kann zusätzlich so gestaltet sein, dass es mit nur geringem Montageaufwand an einer bestehenden Schleifringanordnung anordenbar ist.

Das Anbieten eines Nachrüstsatzes mit einem Spiralgehäuse ermöglicht es, bestehende Schleifringanordnungen beispielsweise in Turbogeneratoren mit einer erfindungsgemäßen Schleifringanordnung auszustatten. Hierdurch ist lediglich ein gegebenenfalls in dem Schleifringsatz befindliches Lüftergehäuse gegen das Spiralgehäuse auszutauschen. Das Spiralgehäuse muss geeignet dimensioniert sein, um an dem Rotor anbringbar und an bzw. um das Radiallüfterrad anordenbar zu sein.

Mit dem Nachrüstsatz können verstopfungsanfälligere Lüftergehäuse durch das erfindungsgemäße Spiralgehäuse ausgetauscht werden. Hierdurch werden Reibstaubablagerungen vermieden, die Schleifkontakteinrichtung kann effektiv gekühlt werden und eine Lebensdauer bzw. Zuverlässigkeit der Schleifringanordnung kann verbessert werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Es zeigen:
- Figur 1: eine Schleifringanordnung für eine elektrische Rotationsmaschine mit schematisch dargestelltem Kühlfluidstrom,
- Figur 2: eine halbseitig dargestellte Schnittansicht durch ein Spiralgehäuse mit Radiallüfterrad,
- Figur 3: ein Verfahren zur Bestimmung von Parametern für das Spiralgehäuse aus Figur 2,
- Figur 4: einen Schnitt senkrecht zu einer Rotationsachse durch ein Spiralgehäuse mit Radiallüfterrad und
- Figur 5: einen Schnitt senkrecht zur Rotationsachse durch ein weiteres Spiralgehäuse mit Radiallüfterrad.

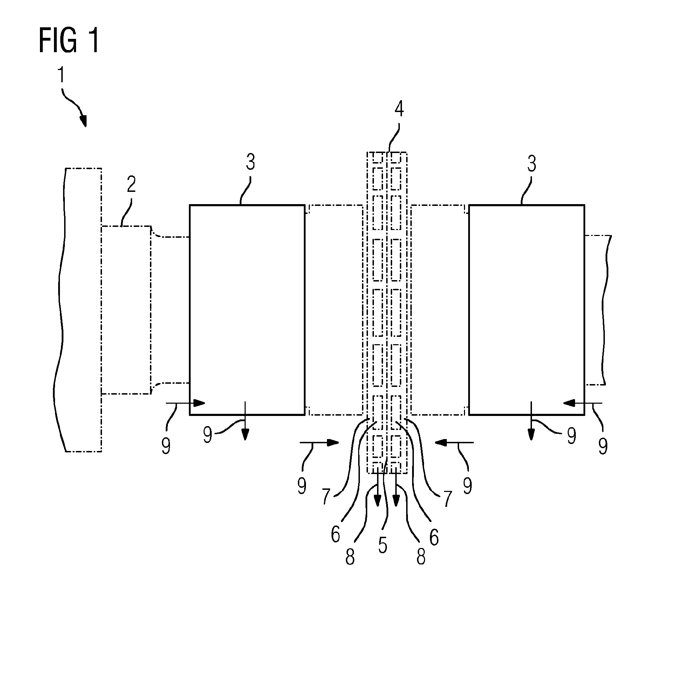

Figur 1 zeigt schematisch eine Schleifringanordnung 1, welche an einem Rotor 2 einer elektrischen Rotationsmaschine, beispielsweise eines Generators, Turbogenerators oder Motors, angeordnet ist. An dem im Bereich der Schleifringanordnung wellenartig ausgestalteten Rotor 2 sind zwei Schleifkontakteinrichtungen 3 derart angeordnet, dass ein Schleifring der Schleifkontakteinrichtung 3 drehfest mit dem Rotor verbunden ist, während ein Schleifkontaktelement wie z.B. eine Kohlebürste an einem Stator der Rotationsmaschine angeordnet und mit diesem elektrisch gekoppelt ist. Schleifring und Schleifkontaktelement sind dabei derart zueinander angeordnet, dass bei einer Rotation des Schleifrings mit dem Rotor der Schleifring zyklisch mit dem Schleifkontaktelement in Kontakt bringbar ist, so dass ein elektrischer Kontakt nach Art einer Bürstenbrücke ausbildbar ist.

Zwischen den Schleifkontakteinrichtungen 3 ist ein Radiallüfterrad 4 angeordnet, welches drehfest oder über ein Getriebe mit dem Rotor 2 verbunden sein kann. Das Radiallüfterrad 4 kann beispielsweise eine Mittelscheibe 5 aufweisen, an der beidseitig jeweils eine Schaufelscheibe 6 mit geringerem radialen Umfang und äußerlich am Umfang angeordneten Schaufeln angeordnet sind, an welchen wiederum beidseitig Deckscheiben 7 mit einem Radius im Wesentlichen entsprechend dem der Mittelscheibe 5 angeordnet sein können. Die Schaufeln können eine Radialerstreckung entsprechend dem Radius der Mittel- bzw. Deckplatten 5, 7 aufweisen. In den Deckplatten 7 können konzentrisch zur Rotationsachse Ausnehmungen vorgesehen sein, die sich radial bis in den Bereich der Schaufeln erstrecken und die somit einen seitlichen Einlass in den Schaufelbereich des Radiallüfterrads 4 bilden.

In einem Betrieb der Rotationsmaschine wird der Rotor 2 in Rotation versetzt. Hierdurch wird an den Schleifkontakteinrichtungen 3 der zyklische Schleifkontakt zwischen dem Schleifring und dem Schleifkontaktelement hergestellt. Gleichzeitig wird das Radiallüfterrad 4 in Rotation versetzt, wobei ein im Schaufelraum befindliches Fluid radial nach außen abgeführt wird, wie durch den Kühlfluidabstrom 8 dargestellt. Hierdurch entsteht ein Sog in den Schaufelraum, der zum Ansaugen eines Fluids seitlich durch die Ausnehmungen der Deckplatten 7 des Radiallüfterrads 4 führt.

Der Sog kann genutzt werden, um mittels einer nach Art eines die Schleifkontakteinrichtungen 3 umschließenden, zu den Ausnehmungen der Deckplatten 7 des Radiallüfterrads 4 führenden Ansaugstutzens ausgebildeten Ansaugeinrichtung ein im Bereich der Schleifkontakteinrichtungen 3 bereitgestelltes Kühlfluid durch die Schleifkontakteinrichtungen 3 und insbesondere entlang dem Schleifring und dem Schleifkontaktelement in das Radiallüfterrad 4 zu saugen, wie durch den Kühlfluidstrom 9 angedeutet. Dies ermöglicht es, einerseits die Schleifkontakteinrichtungen 3 effektiv zu kühlen und andererseits einen durch den Schleifkontakt von dem Schleifkontaktelement und/oder dem Schleifring abgespanten Reibstaub aus der Schleifkontakteinrichtung 3 und der gesamten Schleifringanordnung 1 heraus zu befördern.

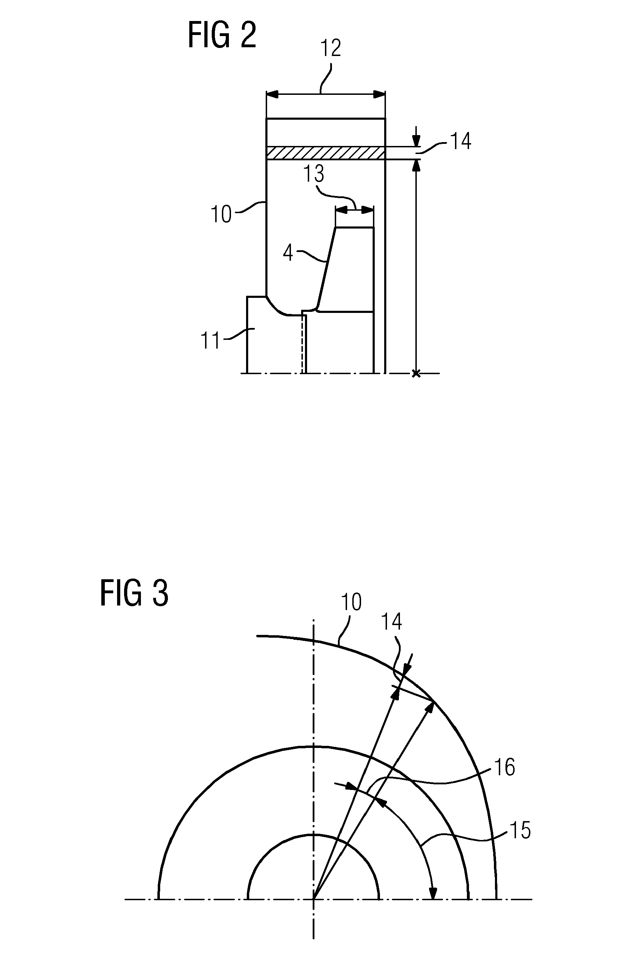

Um das mit dem Reibstaub durchsetzte und erwärmte Kühlfluid gezielt und effektiv aus der Schleifringanordnung 1 zu entfernen, kann außen an einem äußeren radialen Umfang des Radiallüfterrads 4 ein das Radiallüfterrad 4 umschließendes Gehäuse angeordnet sein, dessen Konstruktion gemäß den Figuren 2 und 3 vorgenommen werden kann.

Figur 2 zeigt schematisch in einer halbseitigen Schnittansicht eine Anordnung eines Spiralgehäuses 10 an einem Radiallüfterrad 4. Seitlich zum Radiallüfterrad 4 führt ein Ansaugstutzen 11 zum Führen eines Kühlfluids in ein Inneres des Radiallüfterrads 4.

Bei einer Auslegung des Spiralgehäuses 10 kann seine Breite 12 breiter gewählt sein als eine Breite 13 des Radiallüfterrads 4 an seinem äußeren Umfang. Ein Radialzuwachs 14 kann, wie in der Zusammenschau von Figur 2 mit Figur 3 deutlich wird, in Abhängigkeit von einem Umfangswinkel 15 und insbesondere in Abhängigkeit von einem Winkelzuwachs 16 bestimmt werden.

Wird hierbei eine Ausbildung des Spiralgehäuses 10 entsprechend einer unter der Annahme eines konstanten Dralls eines Kühlfluid- oder Reibstaubpartikels berechneten Stromfadenlinie angestrebt, so kann sich beispielsweise eine Gestaltung einer Innenwand des Spiralgehäuses 10 in Form einer logarithmischen Spirale ergeben.

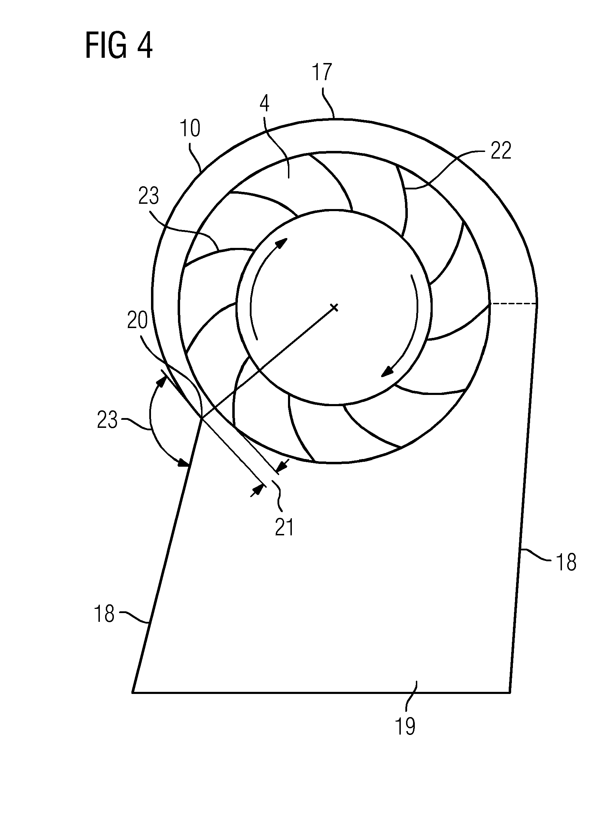

Figur 4 zeigt ein Spiralgehäuse 10 mit einem darin angeordneten Radiallüfterrad 4 mit angedeuteter Drehrichtung. Das Spiralgehäuse 10 weist einen Spiralbereich 17 auf, in dem eine Innenwand des Spiralgehäuses 10 im Wesentlichen einer Spiralfunktion entsprechend von einer Rotationsachse des Rotors 2 und damit auch von einem äußeren Umfang des Radiallüfterrads 4 beabstandet ist. Durch die spiralförmige Anordnung der Innenwand des Spiralgehäuses 10 verbreitert sich der Freiraum zwischen dem äußeren Umfang des Radiallüfterrads 4 und der Innenwand des Spiralgehäuses 10 stromab, so dass ein von dem Radiallüfterrad 4 ausgeblasener, mit dem Reibstaub durchsetzter Kühlfluidstrom effektiv durch den Spiralbereich 17 in einen Abströmbereich 18 des Spiralgehäuses 10 abgeführt werden kann. Der in Strömungsrichtung zunehmende Abstand zwischen der Innenwand des Spiralgehäuses 10 und dem äußeren Umfang des Radiallüfterrads 4 ermöglicht es, das Kühlfluid mit den Reibstaubpartikeln derart abzuführen, dass Bereiche mit hohem Druck sowie große Druckunterschiede im Spiralbereich 17 vermieden werden. Rück- oder Totstromgebiete, in denen sich der Reibstaub am Gehäuse ablagern könnte, werden so weitgehend vermieden.

Stromab vom Spiralbereich 17 wird das mit dem Reibstaub durchsetzte Kühlfluid durch den Abströmbereich 18 zu einer Abströmöffnung 19 geführt, wo es aus dem Spiralgehäuse 10 ausgeleitet wird.

In einem Übergangsbereich zwischen dem Spiralbereich 17 und dem Abströmbereich 18 bildet die Innenwand des Spiralgehäuses 10 eine Zunge 20 derart aus, dass an der Zunge ein Zungenabstand 21 zwischen der Innenwand des Spiralgehäuses 10 und einem äußeren Umfang des Radiallüfterrads 4 minimal ist, dass also der minimale radiale Abstand zwischen der Innenwand des Spiralgehäuses 10 und dem äußeren Umfang des Radiallüfterrads 4 im Zungenbereich angenommen wird. Der Zungenbereich bildet einen Vorstand in das Innere des Spiralgehäuses 10 hinein. Insbesondere ist im gezeigten Beispiel der Zungenabstand 21 kleiner die Hälfte einer Radialerstreckung von Schaufeln 22 des Radiallüfterrads 4.

Hierdurch wird erreicht, dass der Abströmbereich 18 nur durch einen schmalen Spalt vor der Zunge 20 mit dem Spiralbereich in Verbindung steht. Hierdurch können Strömungsgebiete mit unterschiedlicher Strömungsrichtung, wie sie einerseits im Spiralbereich und andererseits stromab dazu im Abströmbereich ausbildbar sind, voneinander im Wesentlichen getrennt werden. Eine Hauptströmungsrichtung ist somit in jedem Bereich des Spiralgehäuses 10 festgelegt.

Hierdurch kann ein Auftreten von Rück- und Totstromgebieten verhindert werden, was den Durchsatz verbessert und gleichzeitig ein Anlagern von Reibstaub an der Innenwand des Spiralgehäuses 10 verhindert.

Weiterhin ist in dem gezeigten Ausführungsbeispiel die Zunge 20 stumpfwinklig ausgebildet, da eine Tangentialfläche der Innenwand im Spiralbereich 17 angrenzend an die Zunge 20 mit einer Tangentialfläche der Innenwand im Abströmbereich 18 angrenzend an die Zunge 20 einen stumpfen Außenwinkel 23 einschließt. Insbesondere kann die Zunge 20 im gezeigten Beispiel einen Außenwinkel 23 zwischen 110° und 130° aufweisen, da sich dieser Bereich als besonders günstig für das Vermeiden von Reibstaubablagerungen an der Zunge 20 erwiesen hat. Hierdurch können Druckspitzen im Bereich der Zunge 20 vermieden und Ablagerungen von Reibstaubpartikeln gemindert werden.

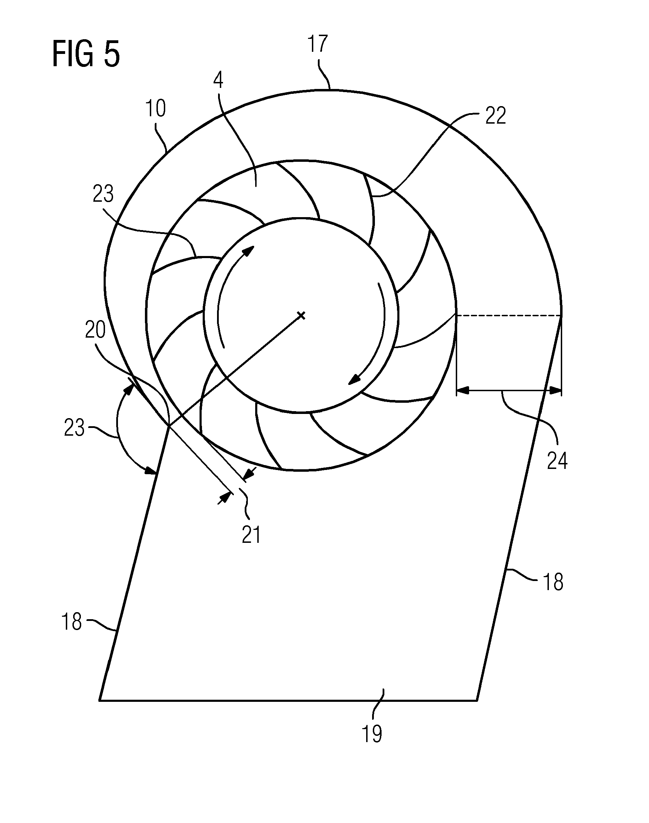

Figur 5 zeigt ein weiteres Beispiel eines Spiralgehäuses 10 mit darin angeordnetem Radiallüfterrad 4, bei dem im Abströmbereich 18 eine Größe der Querschnittsfläche in Strömungsrichtung konstant ist. Dies kann bei einer gleichbleibenden Höhe des Abströmbereichs 18 in Richtung der Rotationsachse des Radiallüfterrads durch eine im Wesentlichen parallele Führung der gegenüberliegenden Abschnitte der Innenwand des Spiralgehäuses 10 erreicht werden.

Durch die in Strömungsrichtung konstante Querschnittsfläche kann im Abströmbereich 18 ein gleichmäßiges Strömungsverhalten erreicht werden, bei dem große Druckdifferenzen und damit Verwirbelungen und Rück- und Totstromgebiete vermieden bzw. reduziert werden können. Hierdurch werden Ablagerungen von Reibstaub im Wesentlichen vermieden.

Weiterhin entspricht ein Maximalwert 24 des radial von der Rotationsachse ausgehend gemessenen Abstands zwischen dem äußeren Umfang des Radiallüfterrads 4 und der Innenwand des Spiralgehäuses 10 dem Sechs- bis Achtfachen des Zungenabstands 21. Hierdurch wird eine Auslegung des Spiralbereichs 17 erreicht, die ein gleichmäßiges Abströmen des mit Reibstaub versetzten Kühlfluids aus dem Radiallüfterrad 4 in den Spiralbereich 17 und von dort aus in den Abströmbereich 18 unterstützt. Hierdurch werden Reibstaubablagerungen an der Innenwand des Spiralgehäuses 10 vermieden.

Demzufolge wird durch die spiralförmige Gehäusegeometrie ein Austrag von Reibstaub verbessert und Ablagerungen des Reibstaubs werden vermieden, wodurch eine verbesserte Einsetzbarkeit und eine verlängerte Lebensdauer der gesamten Schleifringanordnung insbesondere an elektrischen Rotationsmaschinen mit Hochleistungsanforderungen erreicht wird.

Obwohl die Erfindung im Detail durch das bevorzugte Ausführungsbeispiel näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.

## Patentansprüche

1. Schleifringanordnung (1) für eine elektrische Rotationsmaschine,
mit einem Rotor (2),
einer an dem Rotor (2) angeordneten Schleifkontakteinrichtung (3) mit einem Schleifring und einem durch den Schleifring elektrisch kontaktierbaren Schleifkontaktelement, einem an dem Rotor (2) angeordneten Radiallüfterrad (4) mit einer Ansaugeinrichtung, wobei die Ansaugeinrichtung derart ausgebildet ist, dass während eines Betriebs des Radiallüfterrads (4) ein Kühlfluid entlang der Schleifkontakteinrichtung (3) durch die Ansaugeinrichtung hindurch in das Radiallüfterrad (4) saugbar ist, und
einem einen radialen Umfang des Radiallüfterrads (4) umschließenden, spiralförmig ausgebildeten Spiralgehäuse (10).

2. Schleifringanordnung (1) nach Anspruch 1,
wobei das Spiralgehäuse (10) einen Spiralbereich (17) und einen stromab von dem Spiralbereich angeordneten Abströmbereich (18) mit einer Abströmöffnung (19) aufweist,
wobei in dem Spiralbereich (17) eine Innenwand des Spiralgehäuses (10) im Wesentlichen einer Spiralfunktion entsprechend von einer Rotationsachse des Rotors (2) beabstandet ist.

3. Schleifringanordnung (1) nach Anspruch 2,
wobei in dem Abströmbereich (18) die Größe der Querschnittsfläche in Strömungsrichtung konstant ist.

4. Schleifringanordnung (1) nach Anspruch 2 oder 3,
wobei in einem Übergangsbereich zwischen dem Spiralbereich (17) und dem Abströmbereich (18) durch die Innenwand eine Zunge (20) derart ausgebildet ist, dass an der Zunge (20) in einer Schnittebene senkrecht zur Rotationsachse ein Zungenabstand (21) zwischen der Innenwand und einem äußeren Umfang des Radiallüfterrads (4) besteht, der minimaler Abstand zwischen der Innenwand und dem äußeren Umfang des Radiallüfterrads (4) ist.

5. Schleifringanordnung (1) nach Anspruche 4,
wobei der Zungenabstand (21) kleiner ist als die Hälfte einer Radialerstreckung von Schaufeln (23) des Radiallüfterrads (4).

6. Schleifringanordnung (1) nach Anspruch 4 oder 5,
wobei in dem Spiralbereich (17) ein Maximalwert (24) eines radial von der Rotationsachse des Rotors (2) ausgehend gemessenen Abstands zwischen dem äußeren Umfang des Radiallüfterrads (4) und der Innenwand einem Sechs- bis Achtfachen des Zungenabstands (21) entspricht.

7. Schleifringanordnung (1) nach einem der Ansprüche 4 bis 6,
wobei die Zunge (20) stumpfwinklig ausgebildet ist.

8. Schleifringanordnung (1) nach einem der Ansprüche 4 bis 7,
wobei die Zunge (20) einen Winkel zwischen 110° und 130° aufweist.

9. Nachrüstsatz für eine Schleifringanordnung (1) nach Anspruch 1 mit dem Spiralgehäuse (10).
